# EUROPEAN PATENT APPLICATION

(11) **EP 3 654 273 A1**
(43) Date of publication of application: **20.05.2020**
(21) Application number: 19844598.3
(22) Date of filing: 01.04.2019
(51) Int. Cl.: G06Q 50/10, G06Q 10/00, G06Q 30/02

(54) **SYSTEM FOR INTEGRATING WASTE COLLECTION SERVICE AND CONTENT DISTRIBUTION SERVICE**

(30) Priority: 01.08.2018 WO PCT/JP2018/028839
(71) Applicant: Taas Inc., Tokyo 150-0011 (JP)
(72) Inventor: OGOSHI Takayuki, Yokohama-shi, Kanagawa 222-0032 (JP)
(74) Representative: Uexküll & Stolberg
(86) International application number: PCT/JP2019/014546
(87) International publication number: WO 2020/026524

(57) **Abstract**

The system of the present invention is a system for integrating a waste collection service that collects waste and a content delivery service that delivers a content, the system comprising: a means for providing the waste collection service at least in response to a request for the waste collection service from a client; a means for providing the content delivery service at least in response to a request for the content delivery service from the client; and a common platform for realizing both providing the waste collection service and providing the content delivery service.

## Description

### [Technical Field]

The present invention relates to a system for integrating a waste collection service and a content delivery service.

### [Background Art]

Management of documents using paper has not disappeared even in the current society in which paperless management is spreading. Highly confidential documents discharged in business places including offices and documents containing personal information discharged from home are disposed of after being shredded in business places, or disposed of through entrustment to waste collectors, which incurs costs, from the point of view of preventing information leakage.

When documents are shredded by a shredder in a business place, confidential documents can be disposed of without a concern about information leakage while the labor costs for shredding documents by a shredder or the disposal costs will be a great burden on companies. Further, when disposal of documents is entrusted to waste collectors, an outsourcing expense to be paid to the waste collectors will be incurred although no labor costs in companies will be incurred.

Thus, an attempt has been made in recent years to collect documents by collectors while maintaining the confidentiality of the documents (PTL 1).

### [Background Art]

### [Patent Literature]

[PTL 1] Japanese Laid-Open Publication No. 2017-210346

### [Summary of Invention]

### [Technical Problem]

In the subject matter described in PTL 1, a collection container of documents is placed in an office or the like, and once the collection container is carried into a waste disposal site by a collector/transporter, that information is transmitted to a user terminal. However, such a technique will lead to a very expensive system because of costs for system operation and information communication in addition to an expense to be paid to a collector/transporter. Thus, many companies cannot introduce the system.

The present invention has been invented in consideration of the above problem to be solved. The objective is to provide a system for collecting waste including documents without incurring an additional expense for companies introducing the system.

Further, the objective of the present invention is to provide a system for integrating a waste collection service and a content delivery service.

### [Solution to Problem]

The present invention provides means for solution as follows.

The invention defined by a first feature provides a waste collection system using a user terminal for throwing waste to be collected, the system comprising: a content acceptance means that accepts providing a content in exchange for payment of an advertisement expense from an advertiser; a content information storage means that stores content information which is information regarding the content provided by the advertiser; a content delivery means that delivers the content to the user terminal; and a content display means that displays the content delivered to the user terminal on a display provided to the user terminal.

According to the invention defined by the first feature, the system comprises a content acceptance means that accepts providing a content in exchange for payment of an advertisement expense from an advertiser. Thus, it is possible to operate a system by the advertisement expense paid by the advertiser, and it is thereby possible to provide a system for which a user does not need to bear an expense for waste collection. Further, since it is possible to display a content delivered from the advertiser on a display provided to a user terminal, it is possible to construct a highly convenient system using a user terminal with the function of digital signage in addition to the function as a mere collection box of waste.

The invention defined by a second feature provides a system that is the invention defined by the first feature, wherein the system further comprises a delivery schedule creation means that creates a schedule of content delivery based on the content information stored in the content information storage means, and the content delivery means delivers a content to a user terminal based on the schedule of content delivery created by the delivery schedule creation means.

According to the invention defined by the second feature, the system comprises a delivery schedule creation means that creates a schedule of content delivery based on content information,. Thus, it is possible to provide a system enabling detailed delivery.

The invention defined by a third feature provides a system that is the invention defined by the first or second feature, wherein the content displayed on the user terminal comprises a means by which a user takes an action in response to the content.

According to the invention defined by the third feature, the content displayed on a user terminal comprises a means by which a user takes an action in response to the content, which more easily leads to an immediate purchasing behavior of the user, and it is thereby possible to provide a system capable of realizing smooth and direct transaction between companies.

The invention defined by a fourth feature provides a system that is the invention defined by the third feature, wherein the means for an action consists of at least any one of operation by a touch panel, display of an URL, or display of QR Code®.

According to the invention defined by the fourth feature, the means for an action consists of at least any one of operation by a touch panel, display of an URL, or display of QR Code®. Thus, it is possible to provide an intuitive system that can be easily operate by anyone.

The invention defined by a fifth feature provides a system that is the invention defined by any of the first to fourth features, wherein the content information comprises information regarding a target to which the content is delivered and/or information regarding a timing at which the content is delivered.

According to the invention defined by the fifth feature, the content information comprises information regarding a target to which the content is delivered and/or information regarding a timing at which the content is delivered. Thus, it is possible to directly provide a content to a user to which deliver is desired by an advertiser, which more easily leads to smooth and direct transaction between companies, and the effect of the advertisement delivered as the content can be thereby further enhanced. Thus, the advertiser can be more easily motivated to advertise, which leads to the use of the present system by many advertisers. It is thereby possible to cover an expense required for collecting and disposing of waste with advertisement expenses by the advertisers, and it is thereby possible to construct a system without an extra expense burden for a user placing a collection box in a company.

The present invention further provides means for solution as follows.

In one aspect of the present invention, the system of the present invention is a system for integrating a waste collection service that collects waste and a content delivery service that delivers a content, the system comprising: a means for providing the waste collection service at least in response to a request for the waste collection service from a client; a means for providing the content delivery service at least in response to a request for the content delivery service from the client; and a common platform for realizing both providing the waste collection service and providing the content delivery service.

In one embodiment of the present invention, the system may further comprise: a means of judging whether a collection amount of waste of the client collected at least in response to the request for the waste collection service exceeds a threshold value; and a means of executing processing for improving a benefit of the client generated from the delivery of a content when it is determined that the collection amount of the waste of the client collected at least in response to the request for the waste collection service exceeds the threshold value.

In one embodiment of the present invention, a threshold value differs depending on an attribute of a client who transmitted the request for the waste collection service, and the system may further comprise a means of specifying the threshold value depending on the attribute of the client.

In one embodiment of the present invention, judging whether the collection amount of the waste of the client collected at least in response to the request for the waste collection service exceeds a threshold value may include judging whether a total collection amount of waste of the client collected in response to all requests for the waste collection service exceeds a threshold value.

In one embodiment of the present invention, judging whether the collection amount of the waste of the client collected at least in response to the request for the waste collection service exceeds a threshold value may include judging whether a collection amount of waste of the client collected within a predetermined period exceeds a threshold value.

In one embodiment of the present invention, the processing for improving the benefit of the client generated from the delivery of the content may include processing for reducing an expense for the delivery of the content.

In one embodiment of the present invention, the processing for improving the benefit of the client generated from the delivery of the content may include processing for increasing delivery time of the content within a predetermined period.

In one embodiment of the present invention, the system may further comprise: a means of judging whether a delivery amount of a content of the client delivered at least in response to the request for the content delivery service exceeds a threshold value; and a means of executing processing for improving a benefit of the client generated from the collection of waste when it is determined that the delivery amount of the content of the client delivered at least in response to the request for the content delivery service exceeds the threshold value.

In one embodiment of the present invention, a threshold value differs depending on an attribute of a client who transmitted the request for the content delivery service, and the system may further comprise a means of specifying the threshold value depending on the attribute of the client.

In one embodiment of the present invention, the system may further comprise a means for tracing collecting or recycling of the waste of the client.

In one embodiment of the present invention, the system may further comprise a means of executing processing for offering a giveaway made by recycling the waste of the client to the client in return.

In one embodiment of the present invention, the system further comprises a collection box for collecting the waste, wherein the collection box may comprise a means for delivering the content.

### [Advantageous Effects of Invention]

According to the present invention, it is possible to provide a system for integrating a waste collection service and a content delivery service.

### [Brief Description of Drawings]

[Figure 1] A figure showing a schematic of a new business model integrating both a waste collection service and an advertisement delivery service
[Figure 2] A block diagram for explaining a hardware configuration and a software function of a computer system **1**
[Figure 3A] A figure showing one example of a configuration of information stored in a client database unit **31**
[Figure 3B] A figure showing one example of a configuration of information stored in a content database unit **32**
[Figure 3C] A figure showing one example of a configuration of information stored in a trace database unit **33**
[Figure 3D] A figure showing one example of a configuration of information stored in a threshold value database unit **34** [Figure 4] A figure showing one example of a configuration of a user terminal **100**
[Figure 5] A figure showing one example of a content **200** that is delivered to a user terminal **100** by a computer system **1** and displayed on a display **130** of a collection box **110**
[Figure 6] A flowchart showing a method for collecting waste and offering a giveaway in return using a computer system **1**
[Figure 7] A figure showing one example of a flow of processing between a computer system **1** and a client terminal
[Figure 8] A figure showing one example of a flow of processing executed in a computer system **1**
[Figure 9] A figure showing one example of a flow of processing executed in a computer system **1**

### [Description of Embodiments]

Embodiments for practicing the present invention are explained hereinafter with reference to the drawings. It should be noted that these embodiments show merely one example, and the technical scope of the present invention is not limited to said embodiments.

### 1. A new business model integrating both a waste collection service and an advertisement delivery service

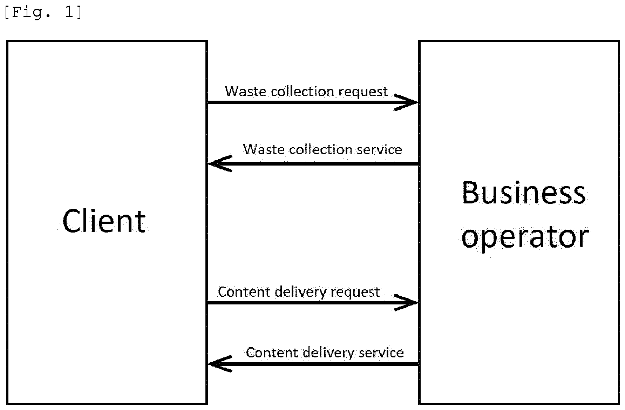

Figure **1** shows a schematic of a new business model integrating both a waste collection service and an advertisement delivery service.

The Applicant proposes a new business model integrating both a waste collection service and an advertisement delivery service. A business operator provides a waste collection service for collecting waste in this new business model. Further, the business operator provides an advertisement delivery service that delivers an advertisement to a collection box for collecting waste. In conventional techniques, a user utilizing a waste collection service paid an expense for collecting waste to a waste collector. According to this new business model, it is possible to reduce or eliminate a burden of an expense for a user to collect and dispose of waste by looking for an advertiser who wants to deliver an advertisement to a collection box for collecting waste, and covering at least a part of the expense for collecting and disposing of the waste with a part of an advertisement expense collected from the advertiser. This enables the user utilizing the waste collection service to utilize the waste collection service at a reduced expense or for free.

According to this new business model, a computer system of a business operator determines whether a client of an advertisement delivery service is a user of a waste collection service (for example, whether the client is a major user whose number of times of utilizing the waste collection service is no less than a threshold value) in response to receipt of an advertisement delivery request from the client of the advertisement delivery service. Such determination is achieved by, for example, the computer system of the business operator referring to user information of the waste collection service (specifically, referring to a client database unit described below) in response to receipt of the advertisement delivery request. When it is determined that the client of the advertisement delivery service is a user of the waste collection service (or a major user whose number of times of utilizing the waste collection service is no less than a threshold value), the computer system of the business operator executes processing for giving preferential treatment to the client of the advertisement delivery service when providing the advertisement delivery service to the client of the advertisement delivery service. One example of the processing for giving preferential treatment to the client of the advertisement delivery service is, but not limited to, processing for reducing the expense for the advertisement delivery service and/or processing for increasing a period of time for the advertisement delivery service.

In the same manner, according to this new business model, a computer system of a business operator determines whether a client of a waste collection service is a user of an advertisement delivery service (or whether the client is a major user whose number of times of utilizing the advertisement delivery service is no less than a threshold value) in response to receipt of a waste collection request from the client of the waste collection service. Such determination is achieved by, for example, the computer system of the business operator referring to user information of the advertisement delivery service (specifically, referring to a client database unit described below) in response to receipt of the waste collection request. When it is determined that the client of the waste collection service is a user of the advertisement delivery service (or a major user whose number of times of utilizing the advertisement delivery service is no less than a threshold value), the computer system of the business operator executes processing for giving preferential treatment to the client of the waste collection service when providing the waste collection service to the client of the waste collection service. One example of the processing for giving preferential treatment to the client of the waste collection service is, but not limited to, processing for reducing the expense for the waste collection service and/or processing for increasing the collection amount of the waste collection service.

### 2. A configuration of a computer system

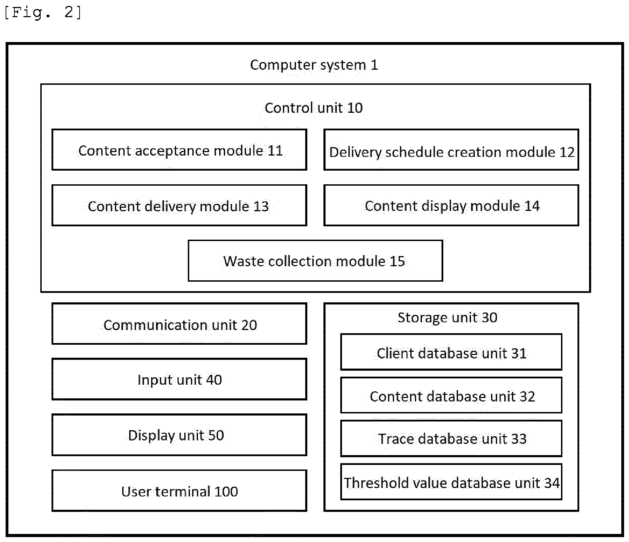

Figure **2** is a block diagram for explaining a hardware configuration and a software function of a computer system **1.**

The computer system **1** provides a platform for realizing both providing a waste collection service that collects waste and providing a content delivery service that delivers a content. For example, this platform is, but not limited to, a website, an application program or the like. A client of the waste collection service and a client of the content delivery service can readily receive the waste collection service and the content delivery service by utilizing this platform using, for example, a client terminal operated by the client (for example, mobile radio terminal (for example, mobile phone, smart phone, tablet terminal, smart glasses, smart watch terminal or the like), personal computer (for example, desktop PC, laptop PC, notebook PC or the like)). It should be noted that the client may be a natural person, or may be a juridical person herein.

The computer system **1** comprises a control unit **10** which controls an action of the computer system **1,** a communication unit **20** which communicates with a device and/or another equipment operated by a client, a storage unit **30** which stores data, an input unit **40** which accepts an input of information from the client, and a display unit **50** which outputs data or images controlled by the control unit **10,** and a user terminal **100** for collecting waste.

The control unit **10** comprises a CPU (Central Processing Unit), an RAM (Random Access Memory), a ROM (Read Only Memory) or the like. The control unit **10** reads out a program stored in the storage unit **30** and executes the program. It is thereby possible to cause the computer system **1** to function as a system executing a desired step.

The communication unit **20** comprises a device (for example, Wi-Fi (Wireless Fidelity)-enabled device based on IEEE802.11) for enabling communication with another equipment (for example, a client terminal operated by a client) via any network.

The control unit **10** realizes a content acceptance module **11,** a delivery schedule creation module **12,** a content delivery module **13,** a content display module **14,** and a waste collection module **15** by reading a predetermined program and cooperating with the communication unit **20** and/or storage unit **30** as required.

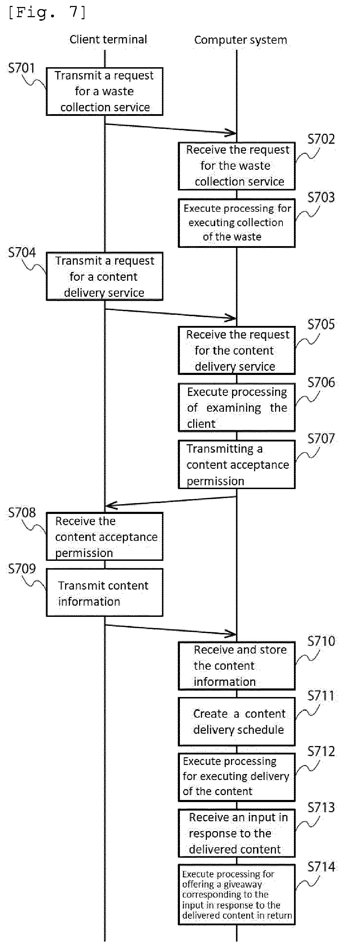

The storage unit **30** is a device which stores data or files, and comprises a storage portion of data consisting of a hard disc, a semiconductor memory, a storage medium, a memory card or the like. A program required for executing processing, data required for executing the program, or the like is stored in the storage unit **30.** For example, a program for executing the processing shown in Figures **7****,** **8****,** and **9** is stored in the storage unit **30.** In this regard, it does not matter how a program is stored in the storage unit **30.** For example, a program may be preinstalled in the storage unit **30.** Alternatively, a program may be installed in the storage unit **30** by being downloaded via a network, or may be installed in the storage unit **30** via a storage medium such as an optical disc or USB. The storage unit **30** comprises a client database unit **31,** a content database unit **32,** a trace database unit **33,** and a threshold value database unit **34.**

The configuration and type of the input unit **40** is not particularly limited but optional. For example, the input unit **40** is, but not limited to, a keyboard, a mouse, a touch panel or the like.

The configuration and type of the display unit **50** is not particularly limited but optional. For example, the display unit **50** is, but not limited to, a monitor, a touch panel or the like.

The client database unit **31,** content database unit **32,** trace database unit **33,** and threshold value database unit **34** are each provided inside a server device **410** in the embodiment shown in Figure **2****,** in which the manner of said units does not matter. For example, the client database unit **31,** content database unit **32,** trace database unit **33,** and threshold value database unit **34** may be configured as a single built-in hard disc device of the computer system 1 in which said units are each independent, or the client database unit **31,** content database unit **32,** trace database unit **33,** and threshold value database unit **34** may be configured as a single built-in hard disc device of the computer system **1.** Alternatively, the client database unit **31,** content database unit **32,** trace database unit **33,** and threshold value database unit **34** may be configured as a single external hard disc device of the computer system **1,** or may be configured as a storage on a cloud connected via a network. The configuration of each of the client database unit **31,** content database unit **32,** trace database unit **33,** and threshold value database unit **34** is not limited to a specific hardware configuration. For example, the client database unit **31,** content database unit **32,** trace database unit **33,** and threshold value database unit **34** may be composed of a single hardware component, or may be composed of a plurality of hardware components.

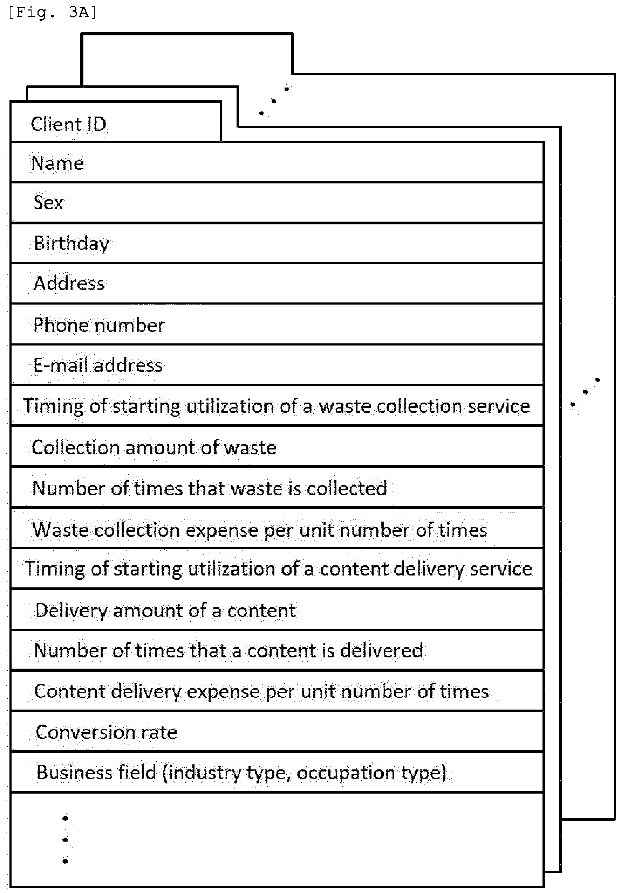

Figure **3A** shows one example of a configuration of information stored in a client database unit **31.**

The client database unit **31** stores information regarding a client of waste collection and/or content delivery. The information regarding the client can be identified by information for identifying the client (client ID) in the embodiment shown in Figure **3A****.** The information regarding the client comprises the client's name, sex, birthday, address, phone number, e-mail address, timing of starting utilization of a waste collection service, collection amount of waste (for example, the collection amount of all waste collected in the past, the collection amount of waste collected within a predetermined period), number of times that waste is collected (for example, the total number of times of collection of all waste collected in the past, the number of times of collection of waste collected within a predetermined period), waste collection expense per unit number of times, timing of starting utilization of a content delivery service, delivery amount of a content (for example, the total delivery time of all contents delivered in the past, the delivery time of a content delivered within a predetermined period, the delivery time per unit number of times), number of times that a content is delivered (for example, the total number of times of delivery of all contents delivered in the past, the number of times of delivery of a content delivered within a predetermined period, the number of times of delivery per unit period), content delivery expense per unit number of times, conversion rate indicating the ratio of the number of times of actions from a delivered content viewer to the number of times that the content is delivered (for example, the number of times of order), business field (industry type, occupation type) or the like. It should be noted that for example, the unit number of times may be, but not limited to, once, twice, three times, four times, five times, ten times, twenty times, fifty times, a hundred times, or the like. Further, for example, the unit period may be, but not limited to, one hour, one day, one week, one month, a half year, one year, or the like.

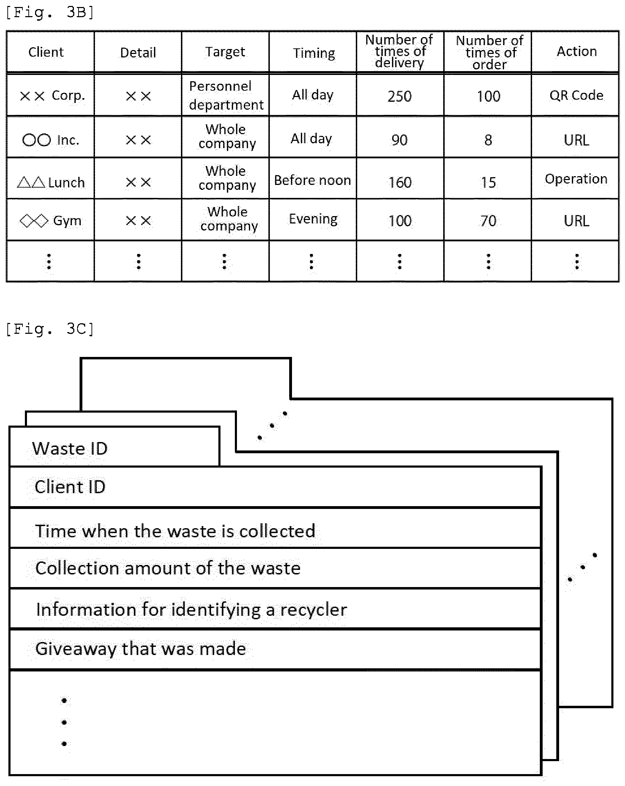

Figure **3B** shows one example of a configuration of information stored in a content database unit **32.**

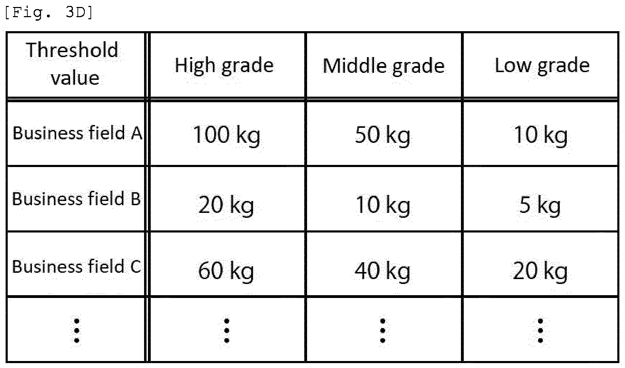

Information regarding a content (content information) is stored in the contend database unit **32.** In the embodiment shown in Figure **3****,** the content information comprises a substantive detail of a content (for example, still picture and/or movie, genre), a target to which delivery of the content is desired (for example, industry type, occupation type), a timing at which delivery of the content is desired, the number of times that the content is delivered, the number of times of orders from a content viewer in response to the delivered content, or the like.

For example, when a client of content delivery is a recruitment agency, the client of content delivery can deliver a content (for example, advertisement) while mainly targeting a personnel department of companies. When a client of content delivery is a company selling office supplies (for example, notebooks, pens or the like), the client of content delivery can deliver a content (for example, advertisement) to various departments of companies that are delivery targets.

For example, when a client of content delivery is a store selling packed meal, the client of content delivery can deliver a content (for example, advertisement) during the time period before noon. When a client of content delivery is a fitness club, the client of content delivery can deliver a content (for example, content showing the way of stretching that one can do in an office) during the time period in the afternoon.

Further, it may be possible to add information regarding a region to a delivered content. This enables a client running business with strong regional characteristics to realize delivery of a content (for example, advertisement) that is more specialized for that region.

In this manner, it is possible to construct a more detailed content delivery system through a configuration that enables registration of a target to which a content is desired to be delivered and a timing at which the content is desired to be delivered in addition to the substantive detail of the content.

In particular, when a destination to which a content is delivered is a private company, delivering the content while narrowing a target or timing in this manner easily leads to smooth and direct transaction between companies, which can further improve the effect of the advertisement delivered as the content.

Thus, since a client of content delivery can be easily motivated to request for deliver of a content (for example, advertisement), it will lead to more frequent use of the computer system **1** by more clients. An increased frequency of utilization of a computer system providing a content delivery service and a waste collection service enables a more decreased charge required for providing the service of waste collection and/or more decreased charge required for providing the service of content delivery.

Further, the content information stored in the content database unit **32** may further, but is not required to, comprise information regarding an action that a content viewer can take in response to a delivered content. For example, the information regarding an action is, but not limited to, displaying QR Code® linking to a sale page, displaying a URL (Uniform Resource Locator) of a sale page, displaying a phone number, displaying a URL of a page displaying a discount coupon, or the like.

In this manner, the information regarding an action in response to a content being stored together in the content database **32** enables construction of a system with high usability for users.

Figure **3C** shows one example of a configuration of information stored in a trace database unit **33.**

Information regarding a trace of waste is stored in the trace database unit **33.** The information regarding a trace of waste can be identified by information for identifying the waste (waste ID). Each of the information regarding a trace of waste is associated with information for identifying a client who discharged the waste (client ID). In the embodiment shown in Figure **3C****,** the information regarding a trace of waste comprises the time when the waste is collected, the collection amount of the waste, information for identifying a recycler who recycles the collected waste, a giveaway made from the collected waste, or the like.

Figure **3D** shows one example of a configuration of information stored in a threshold value database unit **34.**

Information regarding a threshold value that is different depending on an attribute of a client (for example, business field (industry type, occupation type)) is stored in the threshold value database unit **34.** In the embodiment shown in Figure **3D****,** a plurality of threshold values for the collection amount of waste are provided in three grades (i.e., high grade, middle grade, low grade), and one or more giveaways (not shown) corresponding to each grade are grouped in advance. For example, in the case of a client of business field A that usually discharges a relatively large amount of waste, the threshold value in the low grade of the collection amount of waste is 10 kg, and a giveaway can be selected from one or more giveaways corresponding to the low grade when the collection amount of waste is 10 kg or more in the embodiment shown in Figure **3D****.** Further, in the case of a client of business field A, the threshold value in the middle grade of the collection amount of waste is 50 kg, and a giveaway can be selected from one or more giveaways corresponding to the middle grade when the collection amount of waste is 50 kg or more. Further, in the case of a client of business field A, the threshold value in the high grade of the collection amount of waste is 100 kg, and a giveaway can be selected from one or more giveaways corresponding to the high grade when the collection amount of waste is 100 kg or more. Meanwhile, for example, in the case of a client of business field B that usually discharges a relatively small amount of waste, the threshold value in the high grade of the collection amount of waste is 20 kg, and a giveaway can be selected from one or more giveaways corresponding to the high grade when the collection amount of waste is 20 kg or more. In this manner, it is possible to fairly evaluate a client who belongs to a business field usually discharging a relatively small amount of waste but collects a considerable amount of waste in terms of the degree of ecology or contribution to social work by changing the threshold value in each grade between a client of a business field that usually discharges a relatively large amount of waste and a client of a business field that usually discharges a relatively small amount of waste.

It should be noted that although the threshold value for the collection amount of waste was explained in the embodiment shown in Figure **3D****,** the present invention is not limited to this. The threshold value may be, for example, a threshold value for the number of times that waste is collected, may be a threshold value for the delivery time of a content, or may be a threshold value for the number of times that a content is delivered per unit time in addition to or instead of the threshold value for the collection amount of waste.

Further, although three grades were explained in the embodiment shown in Figure **3D****,** the present invention is not limited to this. The number of grades is any integer of 1 or more.

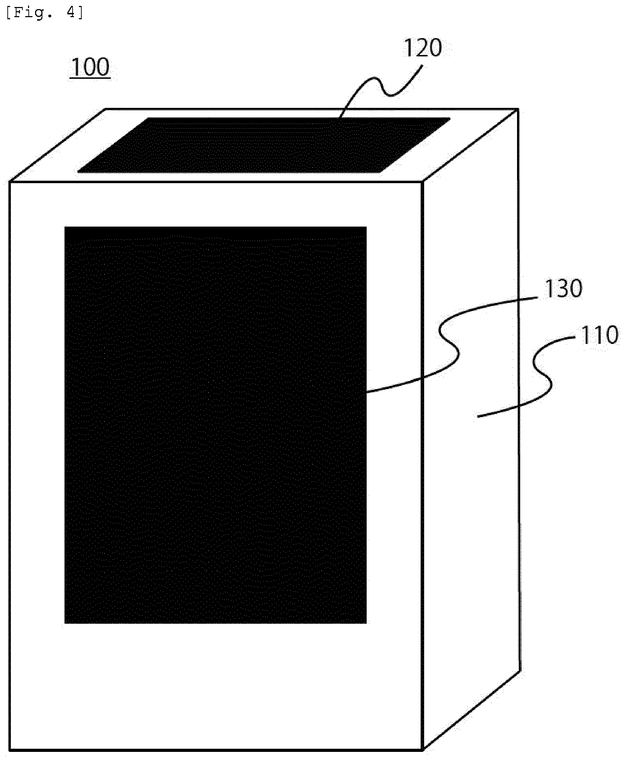

Figure **4** shows one example of a configuration of a user terminal **100.**

In the embodiment shown in Figure **4****,** the user terminal **100** is configured as a collection box **110** for collecting highly confidential documents or other waste. In the embodiment shown in Figure **4****,** a throw-in slot **120** for throwing waste is provided to the user terminal **100.** A user can throw waste that the user wants a collector to collect through the throw-in slot **120.**

A collection bag (not shown) is provided inside the collection box **110.** The collection box **110** is configured so that the waste thrown through the throw-in slot **120** is contained in the collection bag. When a collector collects the thrown waste, the collector does not collect the collection box **110** but collects the collection bag placed inside the collection box **110.** When the collector collects the collection bag, the collector places a new another collection bag inside the collection box **110.**

A communication circuit (not shown) is provided to the collection box **110.** The collection box **110** is configured to be capable of communicating with another equipment by comprising, for example, a Wi-Fi (Wireless Fidelity)-enabled device based on IEEE802.11.

Further, a display **130** is provided to the collection box **110.** The display **130** is configured so that a content that is delivered from a client of content delivery via a computer system **1** and the communication circuit is displayed in accordance with a delivery schedule described below. The display **130** is configured of, for example, a touch panel. As described below, a content viewer can order an item displayed in the content by operating the touch panel.

It should be noted that although the throw-in slot **120** is provided on the top surface of the collection box **110** and the display **130** is provided on the front surface of the collection box **110** in the embodiment shown in Figure **4****,** the present invention is not limited to this. For example, the throw-in slot **120** may be provided on the front surface of the collection box **110** and the display **130** may be provided on the top surface of the collection box **110.** Alternatively, both the throw-in slot **120** and the display **130** may be provided on the top surface or the front surface of the collection box **110.**

Further, although an example in which the communication circuit (not shown) and the display **130** are provided integrally with the collection box **110** was explained in the embodiment shown in Figure **4****,** the present invention is not limited to this. For example, a portable tablet terminal comprising a communication circuit and a display may be used to detachably provide the tablet terminal to the collection box **110.** Since this enables a collector to remove the tablet terminal and collect the collection box **110** itself when the collector collects waste, the effect of eliminating the need for a collection bag is achieved. Further, when the communication circuit and the display **130** are provided integrally with the collection box **110,** it is necessary to perform an operation for the purchase at a location where the collection box is placed in order to purchase an item displayed on the display. However, when a portable tablet terminal is used, it is possible to construct a system with high usability because such an operation can be performed at a location such as one's own desk other than the location where the collection box is placed.

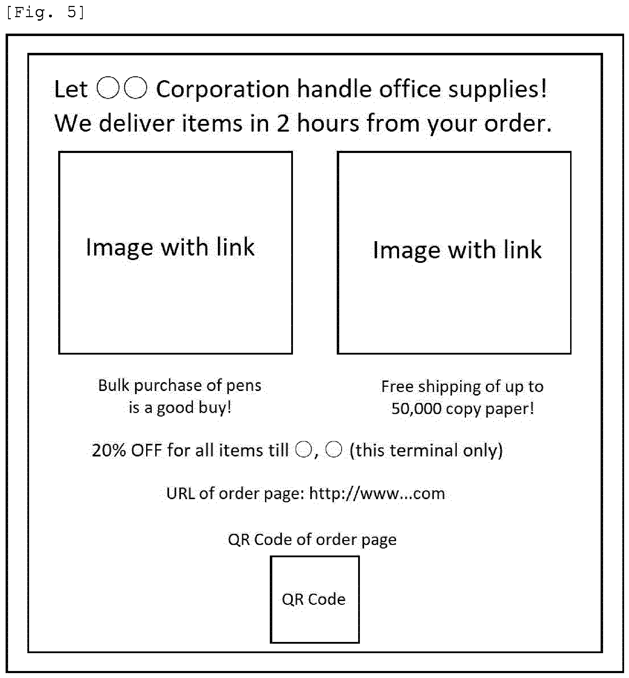

Figure **5** shows one example of a content **200** that is delivered to a user terminal **100** by a computer system **1** and displayed on a display **130** of a collection box **110.** In the embodiment shown in Figure **5****,** a client of content delivery is a company selling office supplies, and the content **200** is a content that is delivered by the company selling office supplies. The URL and QR Code® of an order page are displayed in the content **200** as a means by which a content viewer takes an action in response to the content **200.** That is, a content viewer can enter this URL on the browser of a terminal (for example, mobile terminal (for example, smart phone)) operated by the content viewer and display the order page as required. Further, the content viewer also can read the QR Code® by a terminal (for example, mobile terminal (for example, smart phone)) operated by the content viewer and display the order page on the terminal.

Further, the user terminal **100** may be configured of a touch panel. This also enables a configuration of displaying an order page by tapping a screen or a specific image displayed on the screen. In this manner, since the user terminal **100** comprising a means by which a content viewer takes an action in response to a content facilitates an operation before reaching the order/purchase, it can more easily lead to a purchase behavior immediately, and it is thereby possible to construct a system capable of realizing smooth and direct transaction between companies.

Further, the user terminal **100** comprises at least one of displaying the URL of an order page, displaying QR Code@ of an order page, and operating a touch panel as a means by which a content viewer takes an action in response to a content. It is thereby possible to construct an intuitive system that can be easily operated by anyone and can easily lead to a purchase behavior immediately.

### 3. A flowchart showing a method for collecting waste and offering a giveaway in return using a computer system 1

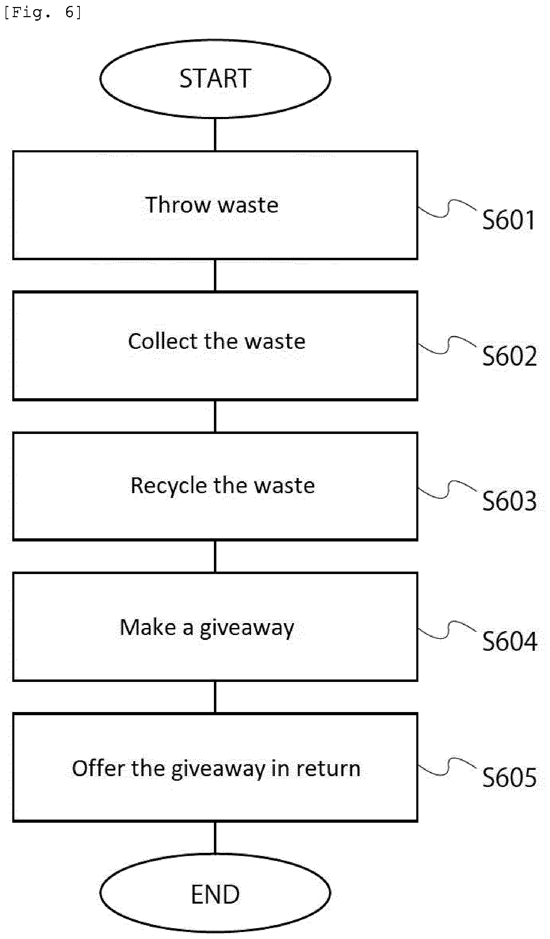

Figure **6** is a flowchart showing a method from collecting waste to offering a giveaway in return using a computer system **1.** With reference to Figure **6****,** it is explained how the waste discharged by a user and desired to be collected is treated. Each step shown in Figure 6 is explained below.

Step **S601:** A client of a waste collection service throws waste that is desired to be collected (for example, highly confidential documents) into a user terminal **100** (collection box **110).** Upon throwing the waste, the client of the waste collection service throws the waste through a throw-in slot **120** provided to the collection box **110,** and the thrown waste is thereby contained in a collection bag placed inside the collection box **110.**

A display **130** provided to the collection box **110** is configured to display the amount of the waste that is currently contained. Once the waste is thrown, display of the amount of the contained waste changes so that the amount of the contained waste increases. It is thereby possible to construct a system with high usability in which the amount of the thrown waste is easily grasped. For example, the amount of the contained waste can be measured by measurement of the weight of the thrown waste by using a weight sensor (not shown) provided to the collection box **110.** Display on the display **130** is in such a manner that the greater weight the thrown waste has, the greater amount the contained waste has. For example, the amount of the contained waste may be represented on the display **130** using a gauge type icon in a stacking-manner or bar graph-manner, or may be represented on the display **130** using numeral value display (parameter display).

Step **S602:** A collector of waste collects the waste thrown into the collection box **110.** The collector goes round the user terminals **100** placed everywhere to collect waste according to a predetermined schedule.

It should be noted that the collection box **110** may be locked by a security lock. This disables taking out the once thrown waste from the throw-in slot **120,** and enables only a designated collector to open the collection box **110** and collect the collection bag (or the collection box **110**) containing the thrown waste.

Step **S603:** The waste collected in step **S602** is transferred to a waste disposal site owned by a disposer, and subjected to processing for recycling. For example, when the collected waste is paper such as used paper, the collected waste is subjected to dissolution processing and then recycled as paper products.

Step **S604:** The collected waste is recycled into various giveaways. It should be noted that the computer system **1** may be configured so that a giveaway to be made is determined depending on the collection amount of collected waste. Upon doing so, it is possible to perform a configuration in which the display **130** provided to the collection box **110** displays the type of a giveaway corresponding to the collection amount of the currently contained waste in addition to display of that collection amount of the waste. It is thereby possible to visualize recycling to enhance recycling awareness of a content viewer, and it is possible to construct a more effective system of collecting waste.

Step **S605:** The giveaway made from the collected waste can be re-commercialized and used for a purpose such as sales promotion of a company. Alternatively, the giveaway made from the collected waste also can be made and used as an item for sale, not for sales promotion. For example, the giveaway made from the collected waste is provided and offered in return to a client of the waste collection service who discharged the collected waste.

### 4. A flow of processing between a computer system and a client terminal

Figure **7** shows one example of a flow of the processing between a computer system **1** and a client terminal. Each step of Figure **7** executed by each hardware and software module described above is explained below.

Step **S701:** The client terminal operated by a client transmits a request for a waste collection service for requesting collection of waste to the computer system **1** (for example, via the Internet). The request for the waste collection service comprises, for example, the type of the waste, the amount to be collected, the name of the client, the position information of the client (address), information for identifying the client (client ID), or the like.

Step **S702:** The computer system **1** receives the request for the waste collection service from the client terminal.

Since the request for the waste collection service comprises the information for identifying the client (client ID), the computer system **1** may create a waste ID corresponding to the received request for the waste collection service in response to receipt of the request for the waste collection service and store various information contained in the request for the waste collection service in a trace database unit **33** while associating the various information with the waste ID. This enables the computer system **1** to manage when the waste collected in response to the request for the waste collection service was collected while being associated with the waste ID and the client ID, how much waste was collected, by which recycler the waste was subjected to recycling processing, which giveaway was made as a result of the recycling processing, or the like. Thus, a giveaway made from the waste collected in response to the request for the waste collection service can be offered in return to the client who made that request. In this manner, reusing the waste discharged from a company for a new giveaway in that company can eliminate discharging of unnecessary waste.

Step **S703:** The computer system **1** executes processing for executing collection of the waste in response to the received request for the waste collection service by a control unit **10** of the computer system **1** executing a waste collection module **15.** For example, the processing for executing collection of the waste is, but not limited to, processing of instructing a person in charge of collecting the waste to collect the waste, processing of determining the date and time for collecting the waste, or the like.

Step **S704:** The client terminal transmits a request for a content delivery service for requesting delivery of a content to the computer system **1** (for example, via the Internet). The request for the content delivery service is, for example, a request through which the client obtains a permission to send a content (for example, an advertisement of the client's company) to a waste collection system **1**. The computer system **1** can be configured so as not to execute processing for delivering a content desired by the client unless a permission to send the content is granted to the client.

Step **S705:** The computer system **1** receives the request for the content delivery service from the client terminal.

Step **S706:** Once the computer system **1** receives the request for the content delivery service, the computer system **1** executes processing of examining the client (that is, processing of judging whether to permit delivery of the desired content of the client) by the control unit **10** of the computer system **1** executing a content acceptance module **11.** The processing of examining the client determines, for example, whether an expense for content delivery (for example, advertisement expense) has been paid by the client, and when the expense for content delivery has been paid by the client, acceptance of content delivery is permitted. It should be noted that the content acceptance module **11** can determine not to permit acceptance of the content when payment of the expense for content delivery by the client cannot be confirmed. Handling an agreement to promise the payment of the expense for content delivery may be a condition for permitting acceptance of the content instead of judging whether the expense for content delivery has been actually paid.

Step **S707:** When the computer system **1** permits acceptance of the content as a result of execution of the processing of examining the client, the computer system **1** transmits a content acceptance permission to the client terminal.

Step **S708:** The client terminal receives the content acceptance permission from the computer system **1**.

Step **S709:** The client terminal transmits content information inputted by the client to the computer system **1** (for example, via the Internet). The content information comprises, for example, the content to be delivered, target of delivery, timing of delivery, information showing an action means (for example, URL, QR Code®) that can be performed in response to the delivered content, or the like. The content information may be comprised in the request for the content delivery service transmitted from the client terminal to the computer system **1** in step **S704.** In this case, step **S709** can be omitted.

Step **S710:** The computer system **1** receives the content information transmitted from the client terminal, and stores the transmitted content information in a content database **32** in cooperation with a storage unit **30.**

When there are a plurality of clients in steps **S704** to **S710,** a content acceptance permission is transmitted to each client and information regarding the content of each client is stored in the content database **32** of the computer system **1.** In this manner, the content database **32** is created based on the content information transmitted from the clients.

It should be noted that the processing in steps **S704** to **S710** may be executed in advance prior to starting the operation of the computer system **1**, or may be appropriately executed at a client's request during the operation of the waste collection system **1**.

Step **S711:** The computer system **1** creates a schedule of delivering the content stored in the content database **32** to a content viewer by the control unit **10** of the computer system **1** executing a delivery schedule creation module **12.** Upon creation of the delivery schedule, it is determined "which content" is delivered "to which user" and "when" said content is delivered based on the content information stored in the content database **32.**

Specifically, it is determined "to which user" the delivery is performed based on the information regarding the target shown in Figure **3B****,** and it is determined "when" the delivery is performed based on the information regarding the timing shown in Figure **3B****.** The computer system **1** executes creation of such a delivery schedule for all user terminals **100** that are already installed.

The number of times that the content is delivered and the total time during which the content is delivered may be determined depending on the expense for content delivery (for example, advertisement expense) that the client of the content delivery (for example, advertiser) pays.

Step **S712:** The computer system **1** executes processing for delivering the content to each user terminal **100** by the control unit **10** of the computer system **1** executing a content delivery module **13** in cooperation with the content database **32** of the storage unit **30** and a communication unit **20.** This content delivery can be executed according to the content delivery schedule created in step **S711.** The processing for delivering the content to each user terminal **100** includes, for example, processing of displaying the content on the display **130** of each user terminal **100** by the control unit **10** of the computer system **1** executing a content display module **14** in cooperation with the communication unit **20.**

Step **S713:** When the content viewer takes an action in response to the delivered content (for example, when the content viewer orders a giveaway on an order page displayed on the terminal of the content viewer by inputting the URL of the order page displayed on the display **130** in the terminal of the content viewer, when the content viewer orders a giveaway on an order page displayed on the terminal of the content viewer by reading QR Code® of the order page displayed on the display **130** with the terminal of the content viewer, when the content viewer orders a giveaway by tapping the screen of the touch panel-display **130**), the computer system **1** receives an input in response to the delivered content.

For example, when the content viewer orders a giveaway on an order page displayed on the terminal of the content viewer by inputting the URL of the order page displayed on the display **130** in the terminal of the content viewer, the computer system **1** receives the order information of the giveaway as an input in response to the delivered content from the content viewer's terminal configured to be capable of communicating with the computer system **1**. For example, when the content viewer orders a giveaway on an order page displayed on the terminal of the content viewer by reading QR Code® of the order page displayed on the display **130** with the terminal of the content viewer, the computer system **1** receives the order information of the giveaway as an input in response to the delivered content from the content viewer's terminal configured to be capable of communicating with the computer system **1**. For example, when the content viewer orders a giveaway by tapping the screen of the touch panel-display **130,** the computer system **1** receives the order information of the giveaway as an input in response to the delivered content from the display **130.**

It should be noted that an input in response to the delivered content is not limited to order information of a giveaway. For example, when the delivered content is a an advertisement of an item, the input in response to the delivered content may be an for requesting a catalog of the item, or may be an input for purchasing the item. For example, when the delivered content is a service advertisement, the input may be an input for making an application for receiving the service.

Step **S714:** The computer system **1** executes processing for offering a giveaway corresponding to the input in response to the delivered content in return. For example, when the delivered content is a content related to one or more giveaways determined depending on the collection amount of waste, processing for offering the one or more giveaways to the client of the waste collection service who discharged the collected waste in return is executed with reference to the trace database unit **33.** For example, the processing for offering a giveaway in return is, but not limited to, processing of preparing mailing of the giveaway or the like.

Alternatively, in step **S714,** the computer system **1** may execute processing for providing a catalog of an item corresponding to the input for requesting the catalog of the item, may execute processing of purchasing an item corresponding to the input for purchasing the item, or may execute processing for providing a service acceptance application form corresponding to the input for making an application for receiving the service.

Although it was explained that steps **S704** to **S714** are executed subsequently to steps **S701** to **S703** in the example shown in Figure **7****,** the present invention is not limited to this. Steps **S701** to **S703** may be executed at any timing between steps **S704** to **S714.**

It should be noted that the computer system **1** may count the number of times that an order or purchase is done relative to the number of times that a content is delivered as shown in Figure **3B****.** This enables the computer system **1** to measure the actual conversion rate relative to content delivery, enables a client of the content delivery to measure the level of the effect of the content delivery utilizing the computer system **1**, and enables a content viewer to readily place an order by using a user terminal. Thus, it is possible to construct a system that is beneficial to both the client of the content delivery and the content viewer.

### 5. A flow of processing executed in a computer system

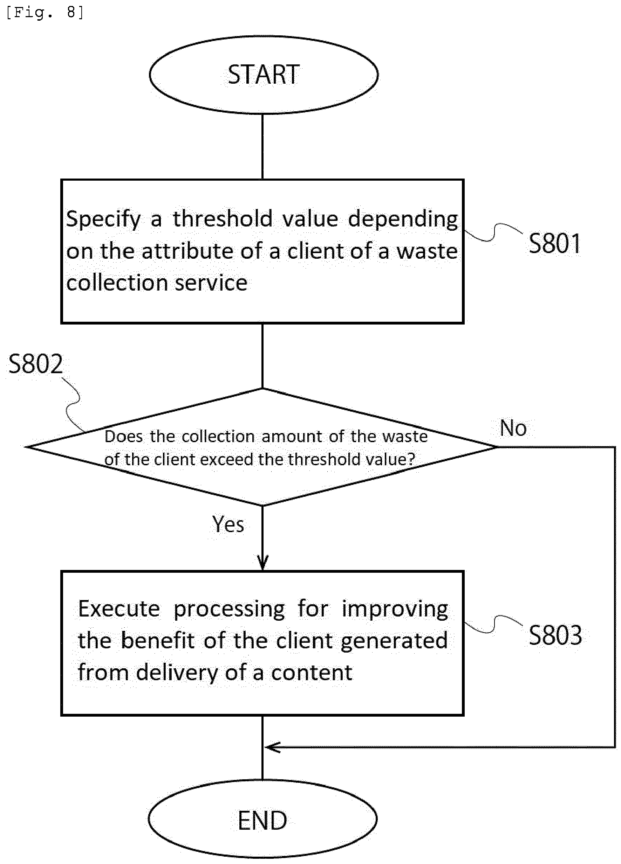

Figure **8** shows one example of a flow of processing executed in a computer system **1**. Each step shown in Figure **8** is explained below.

Step **S801:** A threshold value is specified depending on the attribute of a client of a waste collection service (for example, the timing of starting utilization of the waste collection service, the collection amount of waste, the number of times that waste is collected, business field (industry type, occupation type)). This processing is executed with reference to the threshold value database unit **34** shown in Figure **3D****.**

Step **S802:** It is determined whether the collection amount of waste of the client of the waste collection service exceeds the threshold value specified in step **S801.** When the determination result is "Yes", the processing proceeds to step **S803.** When the determination result is "No", the processing ends (normal end).

Step **S803:** Processing for improving the benefit of the client generated from delivery of a content is executed. For example, the processing for improving the benefit of the client generated from delivery of a content is, but not limited to, processing of increasing the delivery time per unit number of times, processing of increasing the number of times of delivery per unit period, processing of decreasing the content delivery expense per unit number of times, or the like.

In this manner, improvement of the benefit of the client related to the content delivery depending on the collection amount of the waste of the client enables the client to delivery the content without substantially bearing the expense for the content delivery.

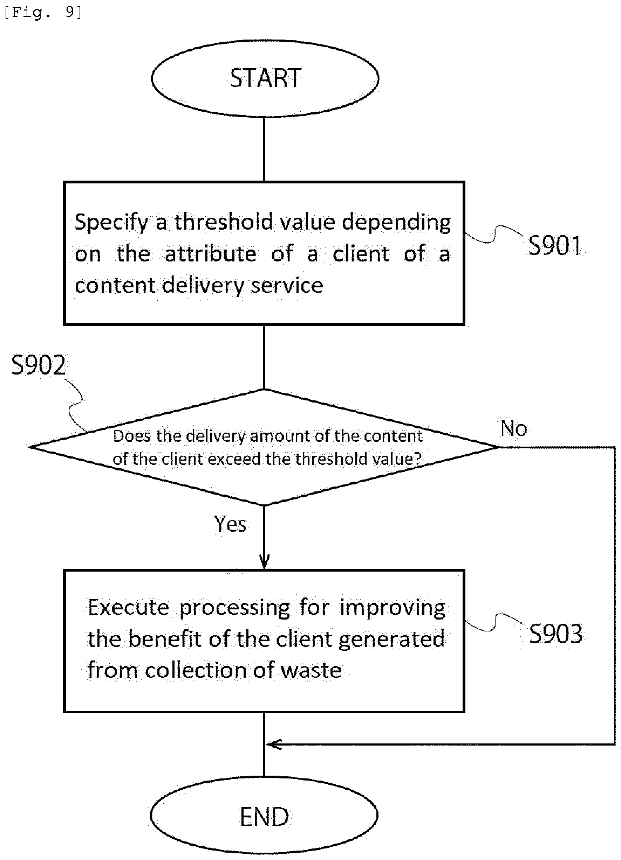

Figure **9** shows one example of a flow of processing executed in a computer system **1**. Each step shown in Figure **9** is explained below.

Step **S901:** A threshold value is specified depending on the attribute of a client of a content delivery service (for example, the timing of starting utilization of the content delivery service, the delivery amount of a content, number of times that a content is delivered, business field (industry type, occupation type)). This processing is executed with reference to the threshold value database unit **34** shown in Figure **3D****.**

Step **S902:** It is determined whether the delivery amount of a content of the client of the content delivery service exceeds the threshold value specified in step **S901.** When the determination result is "Yes", the processing proceeds to step **S903.** When the determination result is "No", the processing ends (normal end).

Step **S903:** Processing for improving the benefit of the client generated from collection of waste is executed. For example, the processing for improving the benefit of the client generated from collection of waste is, but not limited to, processing of decreasing the waste collection expense per unit number of times or the like.

In this manner, improvement of the benefit of the client related to the waste collection depending on the delivery amount of the content of the client enables the client to collect the waste without substantially bearing the expense for the waste collection.

The above configuration enables construction of a system that can cover an expense for collecting and disposing of waste with an advertisement expense paid by an advertiser. This enables a client of a waste collection service to reduce an extra expense burden (for example, labor costs and outsourcing costs) required for disposing of waste including documents, and enables a client of a content delivery service to get an opportunity of transaction between companies, and a system that is beneficial to both clients can be thereby constructed.

The present invention has been exemplified with preferable embodiments of the present application, but the present invention should not be interpreted to be limited to the embodiments. It is understood that the scope of the present invention should be interpreted based solely on the Claims. It is understood that those skilled in the art can implement an equivalent scope from the descriptions of the specific preferred embodiments of the invention based on the description of the present invention and common general knowledge.

### [Industrial Applicability]

The present invention is useful as an invention providing a system or the like for integrating a waste collection service and a content delivery service.

### [Reference Signs List]

- **1**: Computer system
- **10**: Control unit
- **11**: Content acceptance module
- **12**: Delivery schedule creation module
- **13**: Content delivery module
- **14**: Content display module
- **15**: Waste collection module
- **20**: Communication unit
- **30**: Storage unit
- **31**: Client database unit
- **32**: Content database unit
- **33**: Trace database unit
- **34**: Threshold value database unit
- **40**: Input unit
- **50**: Display unit
- **100**: User terminal

## Claims

1. A system for integrating a waste collection service that collects waste and a content delivery service that delivers a content, the system comprising:
a means for providing the waste collection service at least in response to a request for the waste collection service from a client;
a means for providing the content delivery service at least in response to a request for the content delivery service from the client; and
a common platform for realizing both providing the waste collection service and providing the content delivery service.

2. The system of claim 1, further comprising:
a means of judging whether a collection amount of waste of the client collected at least in response to the request for the waste collection service exceeds a threshold value; and
a means of executing processing for improving a benefit of the client generated from the delivery of a content when it is determined that the collection amount of the waste of the client collected at least in response to the request for the waste collection service exceeds the threshold value.

3. The system of claim 2, wherein:
a threshold value differs depending on an attribute of a client who transmitted the request for the waste collection service; and
the system further comprises a means of specifying the threshold value depending on the attribute of the client.

4. The system of claim 2 or 3, wherein judging whether the collection amount of the waste of the client collected at least in response to the request for the waste collection service exceeds a threshold value includes judging whether a total collection amount of waste of the client collected in response to all requests for the waste collection service exceeds a threshold value.

5. The system of claim 2 or 3, wherein judging whether the collection amount of the waste of the client collected at least in response to the request for the waste collection service exceeds a threshold value includes judging whether a collection amount of waste of the client collected within a predetermined period exceeds a threshold value.

6. The system of any of claims 2 to 5, wherein the processing for improving the benefit of the client generated from the delivery of the content includes processing for reducing an expense for the delivery of the content.

7. The system of any of claims 2 to 6, wherein the processing for improving the benefit of the client generated from the delivery of the content includes processing for increasing delivery time of the content within a predetermined period.

8. The system of claim 1, further comprising:
a means of judging whether a delivery amount of a content of the client delivered at least in response to the request for the content delivery service exceeds a threshold value; and
a means of executing processing for improving a benefit of the client generated from the collection of waste when it is determined that the delivery amount of the content of the client delivered at least in response to the request for the content delivery service exceeds the threshold value.

9. The system of claim 8, wherein:
a threshold value differs depending on an attribute of a client who transmitted the request for the content delivery service; and
the system further comprises a means of specifying the threshold value depending on the attribute of the client.

10. The system of any of claims 1 to 9, further comprising a means for tracing collecting or recycling of waste of the client.

11. The system of claim 10, further comprising a means of executing processing for offering a giveaway made by recycling the waste of the client to the client in return.

12. The system of any of claims 1 to 11, wherein:
the system further comprises a collection box for collecting the waste; and
the collection box comprises a means for delivering the content.
